# EUROPEAN PATENT SPECIFICATION

(11) **EP 2 339 267 B1**
(45) Date of publication and mention of the grant of the patent: **01.06.2016**
(21) Application number: 10189240.4
(22) Date of filing: 28.10.2010
(51) Int. Cl.: F25B 13/00, F25B 29/00

(54) **Refrigerating cycle apparatus, heat pump type hot water supply air conditioner and outdoor unit thereof**
Kühlkreisvorrichtung, wärmepumpenähnliche Warmwasserversorgungsklimaanlage und Außeneinheit dafür
Appareil à cycle de réfrigération, climatiseur d'air alimenté en eau chaude de type pompe à chaleur et unité d'extérieur correspondante

(30) Priority: 24.12.2009 KR 20090131120
(43) Date of publication of application: 29.06.2011
(73) Proprietor: Samsung Electronics Co., Ltd., Suwon-si, Gyeonggi-do, 443-742 (KR)
(72) Inventor: Kim, Joon Hyoung, Gyeonggi-do (KR); Oh, Jae Hyuk, Gyeonggi-do (KR); Shin, Se Hoon, Seoul (KR); Cho, Sung Whoon, Gyeonggi-do (KR)
(74) Representative: Grünecker Patent- und Rechtsanwälte PartG mbB

(56) References cited:
- JP-A- 5 010 629
- JP-A- 2003 106 705
- US-A- 4 856 578

## Description

### BACKGROUND

### 1. Field

Embodiments of the present invention relate to a refrigerating cycle apparatus, a heat pump type hot water supply air conditioner and an outdoor unit thereof which use waste heat generated during an indoor air cooling operation to heat water so as to supply hot water.

### 2. Description of the Related Art

In general, a heat pump type hot water supplier uses heat of a heat pump, including a compressor, an outdoor air heat exchanger, an expansion device, and a water-refrigerant heat exchanger, to heat an indoor floor. Further, a heat pump type air conditioner uses heat of a heat pump, including a compressor, an outdoor air heat exchanger, an expansion device, and an indoor air heat exchanger, to cool and heat indoor air.

Recently, the heat pump type hot water supplier and the heat pump type air conditioner are used separately. Therefore, if a consumer desires to simultaneously operate the two systems, the consumer needs to purchase the respective systems.

US 4,856,578 A discloses a heat pump unit capable of producing hot potable water irregardless of the heating or cooling operation of the heat pump. The heat pump unit includes a system of piping interconnecting a compressor, refrigerant-air heat exchanger, external source-refrigerant heat exchanger, refrigerant-potable water heat exchanger, refrigerant-control device, and a valve means for circulating refrigerant from the potable water heating cycle position to the heating and cooling cycle position. The valve means includes a reversing valve and a three-way valve for circulating the refrigerant.

### SUMMARY

Therefore, it is an aspect of the present invention to provide a refrigerating cycle apparatus, a heat pump type hot water supply air conditioner and an outdoor unit thereof which heat water so as to use the heated water to cool and heat indoor air and to heat an indoor floor simultaneously.

It is another aspect of the present invention to provide a refrigerating cycle apparatus, a heat pump type hot water supply air conditioner and an outdoor unit thereof which use waste heat, generated during an indoor air cooling operation, to heat water so as to supply hot water,.

Additional aspects of the invention will be set forth in part in the description which follows and, in part, will be obvious from the description, or may be learned by practice of the invention.

In accordance with one aspect of the present invention, a refrigerating cycle apparatus includes a refrigerant pipe unit, to which a compressor, a first three-way valve, a second three-way valve, an outdoor air heat exchanger, a third three-way valve, an electronic expansion valve, a fourth three-way valve, a water-refrigerant heat exchanger, a fifth three-way valve, and an indoor air heat exchanger are sequentially connected, a first bypass pipe connecting the first three-way valve to the refrigerant pipe unit between the water-refrigerant heat exchanger and the fifth three-way valve, a second bypass pipe connecting the second three-way valve and the third three-way valve, a third bypass pipe connecting the fourth three-way valve and the indoor air heat exchanger, and a fourth bypass pipe connecting the second bypass pipe and the third bypass pipe.

When the first to fifth three-way valves are switched off, the refrigerant may pass through the refrigerant pipe unit and may not pass through any one of the first to fourth bypass pipes.

When the first, third, and fifth three-way valves are switched on and the second and fourth three-way valves are switched off, the refrigerant may pass through the refrigerant pipe unit and the first to fourth bypass pipes.

When the first, second, and third three-way valves are switched off and the fourth and fifth three-way valves are switched on, the refrigerant may flow to the indoor air heat exchanger through the third bypass pipe.

When the first, third, and fifth three-way valves are switched on and the second and fourth three-way valves are switched off, the refrigerant may flow to the water-refrigerant heat exchanger through the first bypass pipe, and then flow to the indoor air heat exchanger sequentially through the fourth three-way valve, the electronic expansion valve, the third three-way valve, the second bypass pipe, the fourth bypass pipe, and the third bypass pipe.

When the first, second, and fifth three-way valves are switched on and the third and fourth three-way valves are switched off, the refrigerant may flow to the water-refrigerant heat exchanger through the first bypass pipe, and then flow to the indoor air heat exchanger sequentially through the fourth three-way valve, the electronic expansion valve, the third three-way valve, the outdoor air heat exchanger, the second three-way valve, the second bypass pipe, the fourth bypass pipe, and the third bypass pipe.

In accordance with another aspect of the present invention, a heat pump type hot water supply air conditioner includes an outdoor unit, an indoor unit, and a hot water supply unit, wherein the outdoor unit includes a first refrigerant pipe unit, to which a compressor, a first three-way valve, a second three-way valve, an outdoor air heat exchanger, a third three-way valve, an electronic expansion valve, a fourth three-way valve, a water-refrigerant heat exchanger, and a fifth three-way valve are sequentially connected, a first bypass pipe connecting the first three-way valve to the first refrigerant pipe unit between the water-refrigerant heat exchanger and the fifth three-way valve, a second bypass pipe connecting the second three-way valve and the third three-way valve, a third bypass pipe connecting the fourth three-way valve and an indoor air heat exchanger, a fourth bypass pipe connecting the second bypass pipe and the third bypass pipe, and a first water circulation pipe unit exchanging heat with a refrigerant in the water-refrigerant heat exchanger, the indoor unit includes the indoor air heat exchanger, and a second refrigerant pipe unit connecting the indoor air heat exchanger to the fifth three-way valve and the third bypass pipe, and the hot water supply unit includes a second water circulation pipe unit connected to the first water circulation pipe unit, and a storage tank connected to the second water circulation pipe unit.

The heat pump type hot water supply air conditioner may further include a control device to control ON/OFF states of the first to fifth three-way valves.

When the control device switches off the first to third three-way valves and switches on the fourth and fifth three-way valves, an indoor air cooling operation or an indoor air heating operation may be performed.

When the control device switches off the first to fifth three-way valves, a hot water supply operation or a cold water supply operation may be performed.

When the control device switches on the first, third, and fifth three-way valves and switches off the second and fourth three-way valves, an indoor air cooling and hot water supply combined operation may be performed.

When the control device switches on the first, second, and fifth three-way valves and switches off the third and fourth three-way valves, an indoor air cooling and hot water supply combined operation may be performed.

In accordance with another aspect of the present invention, a heat pump type hot water supply air conditioner includes an outdoor unit including a compressor, an outdoor air heat exchanger, an expansion device, and a water-refrigerant heat exchanger, an indoor unit including an indoor air heat exchanger exchanging heat with the outdoor air heat exchanger, and a hot water supply unit exchanging heat with the water-refrigerant heat exchanger, wherein the outdoor unit further includes a first refrigerating pipe unit including a first refrigerant pipe connecting the compressor and the outdoor air heat exchanger, a second refrigerant pipe connecting the outdoor air heat exchanger and the expansion device, a third refrigerant pipe connecting the expansion device and the water-refrigerant heat exchanger, and a fourth refrigerant pipe connecting the water-refrigerant heat exchanger and the compressor, a first three-way valve provided on the first refrigerant pipe, a second three-way valve provided between the first three-way valve and the outdoor air heat exchanger, a third three-way valve provided on the third refrigerant pipe, a third three-way valve provided on the fourth refrigerant pipe, a fifth three-way valve provided on the second refrigerant pipe, a first bypass pipe connecting the first three-way valve to the first refrigerant pipe unit between the water-refrigerant heat exchanger and the fifth three-way valve, a second bypass pipe connecting the second three-way valve and the third three-way valve, a third bypass pipe connecting the fourth three-way valve and the indoor air heat exchanger, a fourth bypass pipe connecting the second bypass pipe and the third bypass pipe, and a first water circulation pipe unit passing through the water-refrigerant heat exchanger, and the indoor unit further includes a second refrigerant pipe unit including a first refrigerant pipe connecting the indoor air heat exchanger to the fifth three-way valve, and a second refrigerant pipe connecting the indoor air heat exchanger to the third bypass pipe.

The heat pump type hot water supply air conditioner may further include a control device to control ON/OFF states of the first to fifth three-way valves.

When the control device switches on the first three-way valve, the first refrigerant pipe of the first refrigerant pipe unit may be connected to the first bypass pipe.

When the control device switches on the second three-way valve, the first refrigerant pipe of the first refrigerant pipe unit may be connected to the second bypass pipe.

When the control device switches on the third three-way valve, the third refrigerant pipe of the first refrigerant pipe unit may be connected to the second to fourth bypass pipes.

When the control device switches on the fourth three-way valve, the fourth refrigerant pipe of the first refrigerant pipe unit may be connected to the third bypass pipe.

When the control device switches on the fifth three-way valve, the second refrigerant pipe of the first refrigerant pipe unit may be connected to the first refrigerant pipe of the second refrigerant pipe unit.

In accordance with a further aspect of the present invention, an outdoor unit of a heat pump type hot water supply air conditioner includes a first refrigerant pipe unit, to which a compressor, a first three-way valve, a second three-way valve, an outdoor air heat exchanger, a third three-way valve, an electronic expansion valve, a fourth three-way valve, a water-refrigerant heat exchanger, and a fifth three-way valve are sequentially connected, a first bypass pipe connecting the first three-way valve to the first refrigerant pipe unit between the water-refrigerant heat exchanger and the fifth three-way valve, a second bypass pipe connecting the second three-way valve and the third three-way valve, a third bypass pipe connecting the fourth three-way valve and an indoor air heat exchanger, a fourth bypass pipe connecting the second bypass pipe and the third bypass pipe, and a water circulation pipe unit exchanging heat with a refrigerant in the water-refrigerant heat exchanger.

The outdoor unit may further include a sub refrigerant pipe connected to the fifth three-way valve and exposed to the outside, and the third bypass pipe may be provided above the sub refrigerant pipe and exposed to the outside.

The water circulation pipe unit may include a first water circulation pipe and a second water circulation pipe provided below the third bypass pipe and the sub refrigerant pipe, arranged in the vertical direction so as to pass through the water-refrigerant heat exchanger, and exposed to the outside.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a schematic view illustrating a heat pump type hot water supply air conditioner in accordance with one embodiment of the present invention;
FIG. 2 is a view illustrating a refrigerating cycle apparatus and a water circulation pipe unit used in the heat pump type hot water supply air conditioner of FIG. 1;
FIG. 3 is a view illustrating a control device of the refrigerating cycle apparatus of FIG. 2;

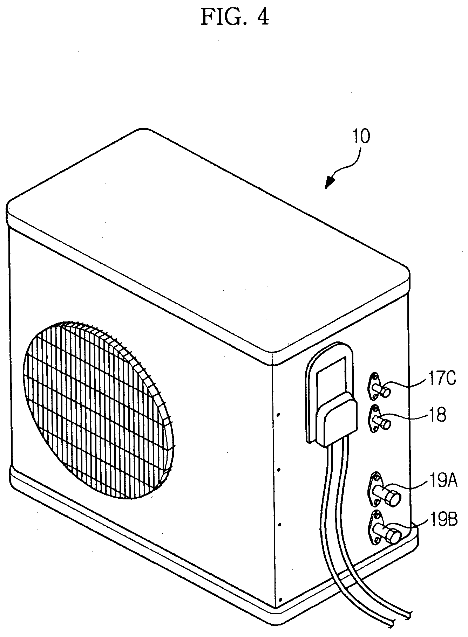

FIG. 4 is a view illustrating an outdoor unit of the heat pump type hot water supply air conditioner of FIG. 1;
FIG. 5 is a view illustrating a flow of a refrigerant during an indoor air cooling operation of the heat pump type hot water supply air conditioner;
FIG. 6 is a view illustrating a flow of the refrigerant during an indoor air heating operation of the heat pump type hot water supply air conditioner;
FIG. 7 is a view illustrating a flow of the refrigerant during a hot water supply operation of the heat pump type hot water supply air conditioner;
FIG. 8 is a view illustrating a flow of the refrigerant during a cold water supply operation of the heat pump type hot water supply air conditioner;
FIG. 9 is a view illustrating a flow of the refrigerant during one indoor air cooling and hot water supply combined operation of the heat pump type hot water supply air conditioner; and
FIG. 10 is a view illustrating a flow of the refrigerant during another indoor air cooling and hot water supply combined operation of the heat pump type hot water supply air conditioner.

### DETAILED DESCRIPTION

Reference will now be made in detail to the embodiments of the present invention, examples of which are illustrated in the accompanying drawings, wherein like reference numerals refer to like elements throughout.

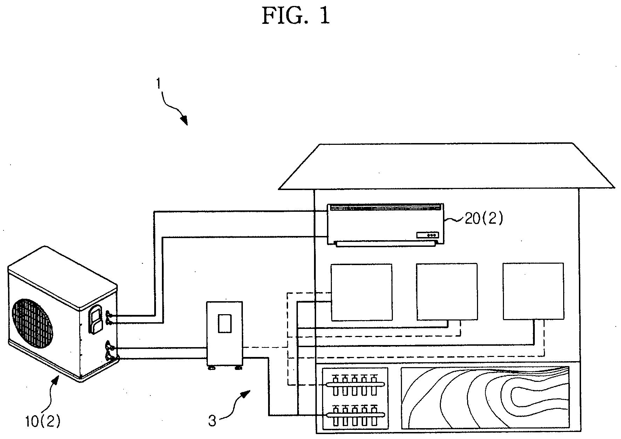

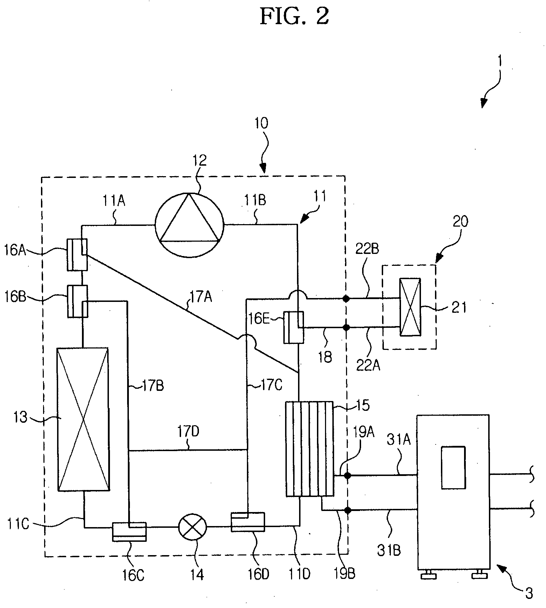

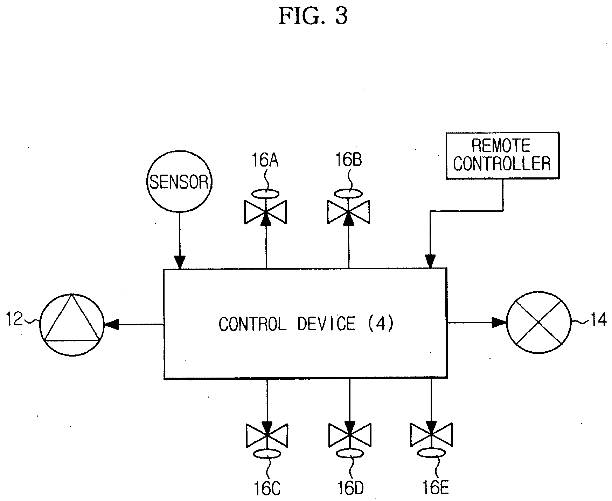

FIG. 1 is a schematic view illustrating a heat pump type hot water supply air conditioner in accordance with one embodiment of the present invention, FIG. 2 is a view illustrating a refrigerating cycle apparatus and a water circulation pipe unit used in the heat pump type hot water supply air conditioner of FIG. 1, and FIG. 3 is a view illustrating a control device of the refrigerating cycle apparatus of FIG. 2.

As shown in FIGS. 1 to 3, a heat pump type hot water supply air conditioner 1 in accordance with this embodiment includes a refrigerating cycle apparatus 2 including an outdoor unit 10 and an indoor unit 20. The refrigerating cycle apparatus 2 performs heat exchange of water stored in a hot water supply unit 3, thus enabling the water to be used to heat a floor or to supply hot water.

The refrigerating cycle apparatus 2 forms a refrigerating cycle to selectively perform an indoor air cooling operation, an indoor air heating operation, a hot water supply operation, and a cold water supply operation.

The refrigerating cycle apparatus 2 includes the outdoor unit 10 arranged outdoors, and the indoor unit 20 arranged indoors.

The outdoor unit 10 includes a first refrigerant pipe unit 11 formed in a closed loop, a compressor 12, an outdoor air heat exchanger 13, an expansion device 14, a water-refrigerant heat exchanger 15 and three-way valves 16A-16E installed on the first refrigerant pipe unit 11, and bypass pipes 17A-17D to bypass the first refrigerant pipe unit 11. The indoor unit 20 includes an indoor air heat exchanger 21 connected to the three-way valve 16E and the bypass pipe 17C through a second refrigerant pipe unit 22A and 22B.

The compressor 12 compresses a refrigerant from a low-temperature and low-pressure gaseous state to a high-temperature and high-pressure gaseous state. The compressor 12 may include a variable capacity compressor having a compression capacity which is variable according to hot water loads.

The compressor 12 may include an inverter compressor having a compression capacity which is variable according to input frequencies, or a combination of a plurality of constant speed compressors, each of which has a constant compression capacity.

The compressor 12 is connected to the outdoor heat exchanger 13 by a first refrigerant pipe 11 A of the first refrigerant pipe unit 11, and is connected to the water-refrigerant heat exchanger 15 by a second refrigerant pipe 11 B of the first refrigerant pipe unit 11.

The outdoor air heat exchanger 13 is a heat exchanger which exchanges heat between the refrigerant and outdoor air. Of course, an outdoor fan (not shown) to blow air to the outdoor air heat exchanger 13 so as to perform heat exchange between the refrigerant and outdoor air may be installed in the outdoor air heat exchanger 13. Such an outdoor air heat exchanger 13 is connected to the compressor 12 by the first refrigerant pipe 11A of the first refrigerant pipe unit 11, and is connected to the expansion device 14 by a third refrigerant pipe 11C of the first refrigerant pipe unit 11, as shown in FIG. 2.

The expansion device 14 is a kind of variable expansion device, which expands or intercepts the refrigerant passing through a pipeline between the outdoor air heat exchanger 13 and the water-refrigerant heat exchanger 15, and includes an electronic expansion valve, an opening value of which is variable, so as to adjust an amount of the refrigerant

The expansion device 14 is connected to the outdoor air heat exchanger 13 by the third refrigerant pipe 11C of the first refrigerant pipe unit 11, and is connected to the water-refrigerant heat exchanger 15 by a fourth refrigerant pipe 11D of the first refrigerant pipe unit 11.

The water-refrigerant heat exchanger 15 is a heat exchanger which exchanges heat between the refrigerant in the high-temperature and high-pressure gaseous state compressed by the compressor 12 and water in water circulation pipe units 19A, 19B, 31A and 31B, or exchanges heat between the refrigerant in the low-temperature and low-pressure gaseous state expanded by the expansion device 14 and water in the water circulation pipe units 19A, 19B, 31 A and 31 B.

The water-refrigerant heat exchanger 15 is connected to the compressor 12 by the second refrigerant pipe 11B of the first refrigerant pipe unit 11, and is connected to the expansion device 14 by the fourth refrigerant pipe 11 D of the first refrigerant pipe unit 11.

Further, a first water circulation pipe unit 19A and 19B passing through the water-refrigerant heat exchanger 15 is connected to the water-refrigerant heat exchanger 15. The first water circulation pipe unit 19A and 19B includes a first water circulation pipe 19A and a second water circulation pipe 19B arranged at upper and lower parts and exposed to the outside of the outdoor unit 10. The first water circulation pipe 19A and the second water circulation pipe 19B are connected to a first water circulation pipe 31A and a second water circulation pipe 31 B of a second water circulation pipe unit 31A and 31B of the hot water supply unit 3, which will be described later, so as to perform heat exchange between water and the refrigerant.

The hot water supply unit 3 includes the second water circulation pipe unit 31A and 31B so as to perform heat exchange with the water-refrigerant heat exchanger 15 of the outdoor unit 10 and the first water circulation pipe unit 19A and 19B. The hot water supply unit 3 further includes a storage tank 32 connected to the second water circulation pipe unit 31A and 31 B to store the heat-exchanged water. The water stored in the storage tank 32 may be used to heat a floor or to supply hot water.

The indoor air heat exchanger 21 performs heat exchange between indoor air and the refrigerant. Of course, an indoor fan (not shown) to blow air to the indoor air heat exchanger 21 so as to perform heat exchange between the refrigerant and indoor air may be installed in the indoor air heat exchanger 21.

The indoor air heat exchanger 21 is connected to a sub refrigerant pipe 18 connected to the fifth three-way valve 16E, which will be described later, through a first refrigerant pipe 22A of the second refrigerant pipe unit 22A and 22B, and is connected to the third bypass pipe 17C, which will be described later, through a second refrigerant pipe 22B of the second refrigerant pipe unit 22A and 22B.

The three-way valves 16A-16E and the bypass pipes 17A-17D are provided on the first refrigerant pipe unit 11 so as to adjust a flow of the refrigerant in the refrigerating cycle apparatus 2.

When the three-way valves 16A-16E are changed from an ON state to an OFF state, each of the three-way valves 16A-16E changes a channel thereof so as to enable the refrigerant to flow from the first refrigerant pipe unit 11 of the second refrigerant pipe unit 22Aand 22B to the bypass pipes 17A-17D.

These three-way valves 16A-16E include a first three-way valve 16A provided on the first refrigerant pipe 11A connecting the compressor 12 and the outdoor air heat exchanger 13, a second three-way valve 16B provided between the first three-way valve 16A and the outdoor air heat exchanger 13, a third three-way valve 16C provided on the third refrigerant pipe 11C connecting the outdoor air heat exchanger 13 and the expansion device 14, a fourth three-way valve 16D provided on the fourth refrigerant pipe 11 D connecting the expansion device 14 and the water-refrigerant heat exchanger 15, and the fifth three-way valve 16E provided on the second refrigerant pipe 11B connecting the water-refrigerant heat exchanger 15 and the compressor 12.

The bypass pipes 17A-17D include a first bypass pipe 17A connecting the first three-way valve 16A and the second refrigerant pipe 11 B, a second bypass pipe 17B connecting the second three-way valve 16B and the third three-way valve 16C, a third bypass pipe 17C connecting the fourth three-way valve 16D and the indoor air heat exchanger 21, and a fourth bypass pipe 17D connecting the second bypass pipe 17B and the third bypass pipe 17C.

The heat pump type hot water supply air conditioner in accordance with this embodiment further includes a control device 4.

When a signal from a remote controller or a sensor is input to the control device 4, the control device 4 controls operations of the compressor 12, the expansion device 14, the first three-way valve 16A, the second three-way valve 16B, the third three-way valve 16C, the fourth three-way valve 16D, and the fifth three-way valve 16E based on the input signal. Plural operations of the heat pump type hot water supply air conditioner 1 are performed by operating the respective three-way valves 16A-16E under the control of the control device 4.

First, the refrigerating cycle apparatus 2 of the heat pump type hot water supply air conditioner 1 performs an indoor air cooling operation by circulating the refrigerant compressed by the compressor 12 sequentially to the outdoor air heat exchanger 13, the expansion device 14, the indoor air heat exchanger 21, and the compressor 12, and performs an indoor air heating operation by circulating the refrigerant compressed by the compressor 12 sequentially to the indoor air heat exchanger 21, the expansion device 14, the outdoor air heat exchanger 13, and the compressor 12.

Further, the refrigerating cycle apparatus 2 of the heat pump type hot water supply air conditioner 1 performs a cold water supply operation by circulating the refrigerant compressed by the compressor 12 sequentially to the outdoor air heat exchanger 13, the expansion device 14, the water-refrigerant heat exchanger 15, and the compressor 12, and performs a hot water supply operation by circulating the refrigerant compressed by the compressor 12 sequentially to the water-refrigerant heat exchanger 15, the outdoor air heat exchanger 13, and the compressor 12.

Further, the refrigerating cycle apparatus 2 of the heat pump type hot water supply air conditioner 1 performs a first indoor air cooling and hot water supply combined operation by circulating the refrigerant compressed by the compressor 12 sequentially to the water-refrigerant heat exchanger 15, the expansion device 14, the indoor air heat exchanger 21, and the compressor 12, and performs a second indoor air cooling and hot water supply combined operation by circulating the refrigerant compressed by the compressor 12 sequentially to the water-refrigerant heat exchanger 15, the expansion device 14, the outdoor air heat exchanger 13, the indoor air heat exchanger 21, and the compressor 12.

Here, if the control device 4 judges that the indoor air heat exchanger 21 alone is sufficient as a heat source to supply hot water, the first indoor air cooling and hot water supply combined operation is performed, and if the control device 4 judges that the indoor air heat exchanger 21 alone is not sufficient as a heat source to supply hot water, the second indoor air cooling and hot water supply combined operation further using the outdoor air heat exchanger 13 is performed.

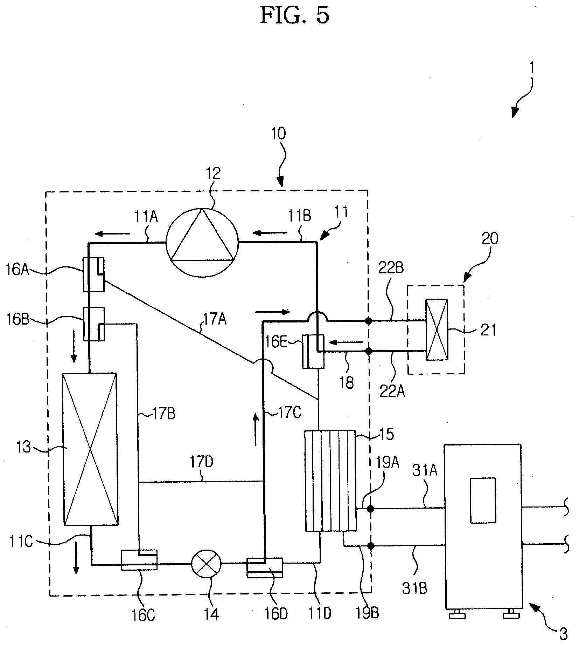

Hereinafter, with reference to FIGS. 5 to 10, individual operations and combined operations of the heat pump type hot water supply air conditioner 1 according to ON/OFF states of the three-way valves 16A-16E by the control device 4 will be described.

First, with reference to FIG. 5, the indoor air cooling operation of the heat pump type hot water supply air conditioner will be described. FIG. 5 is a view illustrating a flow of the refrigerant during the indoor air cooling operation of the heat pump type hot water supply air conditioner.

As shown in FIG. 5, when the indoor air cooling operation of the heat pump type hot water supply air conditioner is performed, the control device 4 switches off the first to third three-way valves 16A-16C, and switches on the fourth and fifth three-way valves 16D and 16E.

Thereby, the refrigerant flows sequentially to the compressor 12, the first three-way valve 16A, the second three-way valve 16B, the outdoor air heat exchanger 13, the third three-way valve 16C, the expansion device 14, the fourth three-way valve 16D, the indoor air heat exchanger 21, and the compressor 12, as shown by arrows in FIG. 5.

Particularly, the fourth three-way valve 16D is switched on so as to enable the refrigerant to flow to the indoor air heat exchanger 21 through the third bypass pipe 17C and the second refrigerant pipe 22B of the second refrigerant pipe unit 22A and 22B, and the fifth three-way valve 16E is switched on so as to enable the refrigerant having been introduced from the first refrigerant pipe 22A of the second refrigerant pipe unit 22A and 22B and the sub refrigerant pipe 18 to flow from the fifth three-way valve 16E to the compressor 12 along the second refrigerant pipe 11B of the first refrigerant pipe unit 11.

Here, the refrigerant is compressed in the compressor 12, the compressed refrigerant emits heat and thus is condensed while passing through the outdoor air heat exchanger 13, the condensed refrigerant is expanded while passing through the expansion device 14, and the expanded refrigerant absorbs heat while passing through the indoor air heat exchanger 21, thereby performing the indoor air cooling operation. At this time, since the fourth three-way valve 16D and the fifth three-way valve 16E are switched on, the refrigerant does not flow to the water-refrigerant heat exchanger 15, and thus the hot water supply unit 3 is not operated.

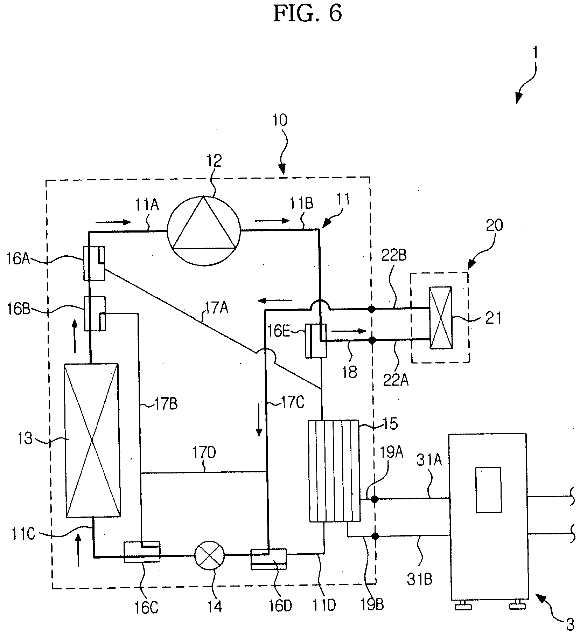

Next, with reference to FIG 6, the indoor air heating operation of the heat pump type hot water supply air conditioner will be described. FIG. 6 is a view illustrating a flow of the refrigerant during the indoor air heating operation of the heat pump type hot water supply air conditioner.

As shown in FIG. 6, when the indoor air heating operation of the heat pump type hot water supply air conditioner is performed, the control device 4 switches off the first to third three-way valves 16A-16C, and switches on the fourth and fifth three-way valves 16D and 16E.

Thereby, the refrigerant flows sequentially to the compressor 12, the fifth three-way valve 16E, the indoor air heat exchanger 21, the fourth three-way valve 16D, the expansion device 14, the third three-way valve 16C, the outdoor air heat exchanger 13, the second three-way valve 16B, the first three-way valve 16A, and the compressor 12, as shown by arrows in FIG. 6.

Particularly, the fifth three-way valve 16E is switched on so as to enable the refrigerant having been introduced from the second refrigerant pipe 11B of the first refrigerant pipe unit 11 to flow from the fifth three-way valve 16E to the indoor air heat exchanger 21 through the sub refrigerant pipe 18 and the first refrigerant pipe 22A of the second refrigerant pipe unit 22A and 22B, and the fourth three-way valve 16D is switched on so as to enable the refrigerant having been introduced from the third bypass pipe 17C to flow from the fourth three-way valve 16D to the expansion device 14 along the fourth refrigerant pipe 11 D.

Here, the refrigerant is compressed in the compressor 12, the compressed refrigerant emits heat and thus is condensed while passing through the indoor air heat exchanger 21, the condensed refrigerant is expanded while passing through the expansion device 14, and the expanded refrigerant absorbs heat while passing through the outdoor air heat exchanger 13, thereby performing the indoor air heating operation. At this time, since the fourth three-way valve 16D and the fifth three-way valve 16E are switched on, the refrigerant does not flow to the water-refrigerant heat exchanger 15, and thus the hot water supply unit 3 is not operated.

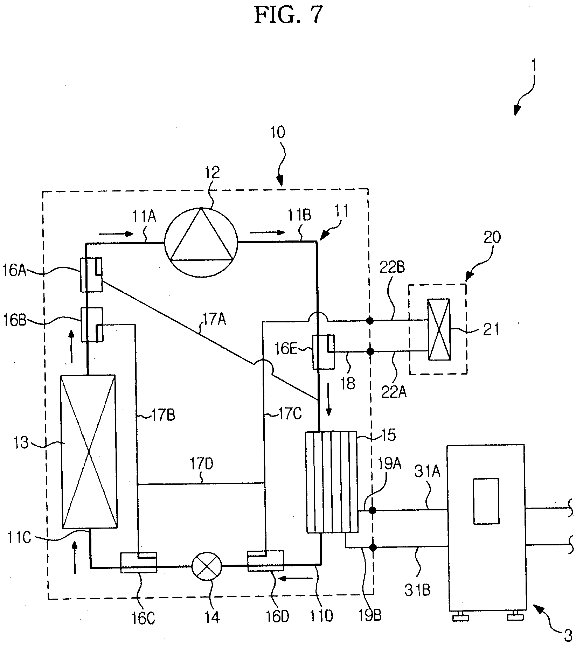

Next, with reference to FIG. 7, the hot water supply operation of the heat pump type hot water supply air conditioner will be described. FIG. 7 is a view illustrating a flow of the refrigerant during the hot water supply operation of the heat pump type hot water supply air conditioner.

As shown in FIG. 7, when the hot water supply operation of the heat pump type hot water supply air conditioner is performed, the control device 4 switches off all the first to fifth three-way valves 16A-16E.

Thereby, the refrigerant flows sequentially to the compressor 12, the fifth three-way valve 16E, the water-refrigerant heat exchanger 15, the fourth three-way valve 16D, the expansion device 14, the third three-way valve 16C, the outdoor air heat exchanger 13, the second three-way valve 16B, the first three-way valve 16A, and the compressor 12, as shown by arrows in FIG. 7.

Particularly, the fifth three-way valve 16E is switched off so as to enable the refrigerant to flow from the compressor 12 to the water-refrigerant heat exchanger 15 along the second refrigerant pipe 11B of the first refrigerant pipe unit 11. In this case, the refrigerant only passes through the first refrigerant pipe unit 11, and does not pass through the second refrigerant pipe unit 22A and 22B or the bypass pipes 17A-17D.

Here, the refrigerant is compressed in the compressor 12, the compressed refrigerant emits heat and thus is condensed while passing through the water-refrigerant heat exchanger 15, the condensed refrigerant is expanded while passing through the expansion device 14, and the expanded refrigerant absorbs heat while passing through the outdoor air heat exchanger 13, thereby performing the hot water supply operation.

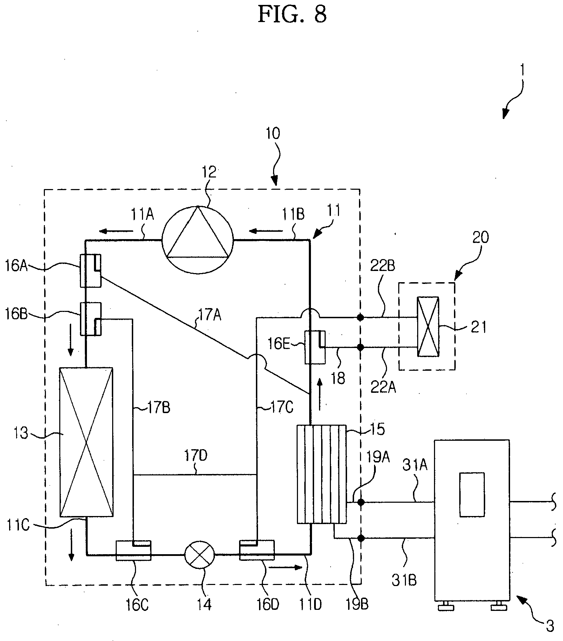

Next, with reference to FIG. 8, the cold water supply operation of the heat pump type hot water supply air conditioner will be described. FIG. 8 is a view illustrating a flow of the refrigerant during the cold water supply operation of the heat pump type hot water supply air conditioner.

As shown in FIG. 8, when the cold water supply operation of the heat pump type hot water supply air conditioner is performed, the control device 4 switches off all the first to fifth three-way valves 16A-16E.

Thereby, the refrigerant flows sequentially to the compressor 12, the first three-way valve 16A, the second three-way valve 16B, the outdoor air heat exchanger 13, the third three-way valve 16C, the expansion device 14, the fourth three-way valve 16D, the water-refrigerant heat exchanger 15, the fifth three-way valve 16E, and the compressor 12, as shown by arrows in FIG. 8.

Particularly, the fifth three-way valve 16E is switched off so as to enable the refrigerant to flow from the water-refrigerant heat exchanger 15 to the compressor 12 along the second refrigerant pipe 11B of the first refrigerant pipe unit 11. In this case, the refrigerant only passes through the first refrigerant pipe unit 11, and does not pass through the second refrigerant pipe unit 22A and 22B or the bypass pipes 17A-17D.

Here, the refrigerant is compressed in the compressor 12, the compressed refrigerant emits heat and thus is condensed while passing through the outdoor air heat exchanger 13, the condensed refrigerant is expanded while passing through the expansion device 14, and the expanded refrigerant absorbs heat while passing through the water-refrigerant heat exchanger 15, thereby performing the cold water supply operation.

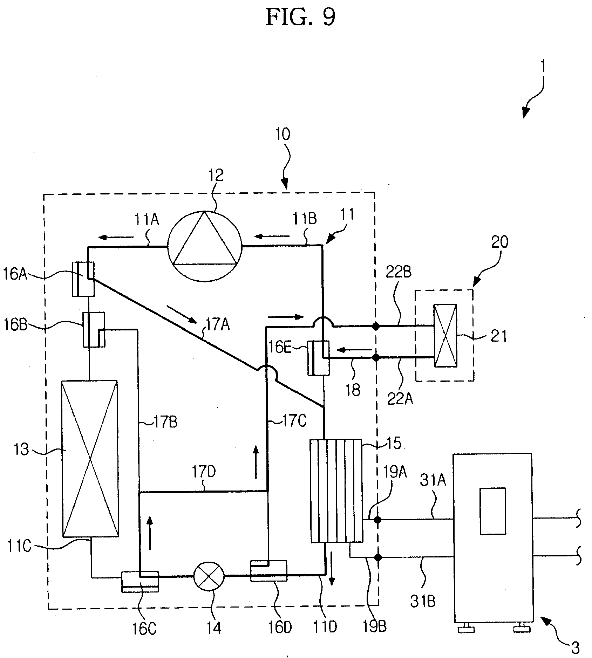

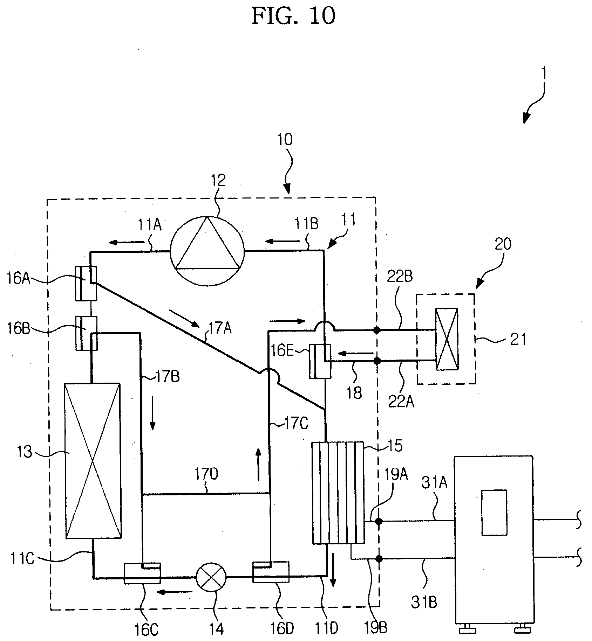

Next, with reference to FIGS. 9 and 10, indoor air cooling and hot water supply combined operations of the heat pump type hot water supply air conditioner will be described.

FIG. 9 is a view illustrating a flow of the refrigerant during one indoor air cooling and hot water supply combined operation of the heat pump type hot water supply air conditioner.

As shown in FIG. 9, when one indoor air cooling and hot water supply combined operation of the heat pump type hot water supply air conditioner is performed, the control device 4 switches on the first three-way valve 16A, the third three-way valve 16C, and the fifth three-way valve 16E, and switches off the second three-way valve 16B and the fourth three-way valve 16D.

Thereby, the refrigerant flows sequentially to the compressor 12, the first three-way valve 16A, the water-refrigerant heat exchanger 15, the fourth three-way valve 16D, the expansion device 14, the third three-way valve 16C, the indoor air heat exchanger 21, and the compressor 12, as shown by arrows in FIG. 9.

Particularly, the first three-way valve 16A is switched on so as to enable the refrigerant to flow to the water-refrigerant heat exchanger 15 along the first bypass pipe 17A. Further, the third three-way valve 16C is switched on so as to enable the refrigerant to flow to the second bypass pipe 17B, and the second three-way valve 16B is switched off so as to enable the refrigerant to flow to the indoor air heat exchanger 21 along the fourth bypass pipe 17D, the third bypass pipe 17C, and the second refrigerant pipe 22B of the second refrigerant pipe unit 22A and 22B.

Here, the refrigerant is compressed in the compressor 12, the compressed refrigerant emits heat and thus is condensed while passing through the water-refrigerant heat exchanger 15, the condensed refrigerant is expanded while passing through the expansion device 14, and the expanded refrigerant absorbs heat while passing through the indoor air heat exchanger 21, thereby performing the indoor air cooling and hot water supply combined operation.

FIG. 10 is a view illustrating a flow of the refrigerant during another indoor air cooling and hot water supply combined operation of the heat pump type hot water supply air conditioner.

As shown in FIG. 10, when another indoor air cooling and hot water supply combined operation of the heat pump type hot water supply air conditioner is performed, the control device 4 switches on the first three-way valve 16A, the second three-way valve 16B, and the fifth three-way valve 16E, and switches off the third three-way valve 16C and the fourth three-way valve 16D.

Thereby, the refrigerant flows sequentially to the compressor 12, the first three-way valve 16A, the water-refrigerant heat exchanger 15, the fourth three-way valve 16D, the expansion device 14, the third three-way valve 16C, the outdoor air heat exchanger 13, the second three-way valve 16B, the indoor air heat exchanger 21, and the compressor 12, as shown by arrows in FIG. 10.

Here, the refrigerant is compressed in the compressor 12, the compressed refrigerant emits heat and thus is condensed while passing through the water-refrigerant heat exchanger 15, the condensed refrigerant is expanded while passing through the expansion device 14, and the expanded refrigerant absorbs heat while passing through the outdoor air heat exchanger 13 and the indoor air heat exchanger 21, thereby performing the indoor air cooling and hot water supply combined operation.

As is apparent from the above description, a heat pump type hot water supply air conditioner in accordance with one embodiment of the present invention selectively performs an indoor air cooling operation, an indoor air heating operation, a hot water supply operation, and a cold water supply operation, and uses waste heat, generated due to the indoor air cooling operation, to perform the hot water supply operation.

Therefore, a refrigerating cycle apparatus, a heat pump type hot water supply air conditioner and an outdoor unit thereof in accordance with one embodiment of the present invention may heat water so as to use the heated water to cool and heat indoor air and to heat an indoor floor simultaneously, and use waste heat, generated during the indoor air cooling operation, to heat water so as to supply hot water.

Although a few embodiments of the present invention have been shown and described, it would be appreciated by those skilled in the art that changes may be made in these embodiments without departing from the principles of the invention, the scope of which is defined in the claims.

## Claims

1. A refrigerating cycle apparatus (2) comprising:
a first refrigerant pipe unit (11), to which a compressor (12), a first three-way valve (16A), a second three-way valve (16B), an outdoor air heat exchanger (13), a third three-way valve (16C), an electronic expansion valve (14), a fourth three-way valve (16D), a water-refrigerant heat exchanger (15), a fifth three-way valve (16E), and an indoor air heat exchanger (21) are sequentially connected;
a first bypass pipe (17A) connecting the first three-way valve (16A) to the first refrigerant pipe unit (11) between the water-refrigerant heat exchanger (15) and the fifth three-way valve (16E);
a second bypass pipe (17B) connecting the second three-way valve (16B) and the third three-way valve (16C);
a third bypass pipe (17C) connecting the fourth three-way valve (16D) and the indoor air heat exchanger (21); and
a fourth bypass pipe (17D) connecting the second bypass pipe (17B) and the third bypass pipe (17C).

2. The refrigerating cycle apparatus according to claim 1, wherein, when the first to fifth three-way valves (16A-E) are switched off, the refrigerant passes through the first refrigerant pipe unit (11) and does not pass through any one of the first to fourth bypass pipes (17A-D).

3. The refrigerating cycle apparatus according to claim 1, wherein, when the first, third, and fifth three-way valves (16A, 16C, 16E) are switched on and the second and fourth three-way valves (16B, 16D) are switched off, the refrigerant passes through the first refrigerant pipe unit (11) and the first to fourth bypass pipes (17A-D).

4. The refrigerating cycle apparatus according to claim 1, wherein, when the first, second, and third three-way valves (16A, 16B, 16C) are switched off and the fourth and fifth three-way valves (16D, 16E) are switched on, the refrigerant flows to the indoor air heat exchanger (21) through the third bypass pipe (17C).

5. The refrigerating cycle apparatus according to claim 1, wherein, when the first, third, and fifth three-way valves (16A, 16C, 16E) are switched on and the second and fourth three-way valves (16B, 16D) are switched off, the refrigerant flows to the water-refrigerant heat exchanger (15) through the first bypass pipe (17A), and then flows to the indoor air heat exchanger (21) sequentially through the fourth three-way valve (16D), the electronic expansion valve (14), the third three-way valve (16C), the second bypass pipe (17B), the fourth bypass pipe (17D), and the third bypass pipe (17C).

6. The refrigerating cycle apparatus according to claim 1, wherein, when the first, second, and fifth three-way valves (16A, 16B, 16E) are switched on and the third and fourth three-way valves (16C, 16D) are switched off, the refrigerant flows to the water-refrigerant heat exchanger (15) through the first bypass pipe (17A), and then flows to the indoor air heat exchanger (21) sequentially through the fourth three-way valve (16D), the electronic expansion valve (14), the third three-way valve (16C), the outdoor air heat exchanger (13), the second three-way valve (16B), the second bypass pipe (17B), the fourth bypass pipe (17D), and the third bypass pipe (16C).

7. A heat pump type hot water supply air conditioner (1) comprising an outdoor unit (10), an indoor unit (20), and a hot water supply unit (3), wherein:
the outdoor unit (10) includes a refrigerating cycle apparatus (2) according to claim 1; and
a first water circulation pipe unit (19A, 19B) exchanging heat with a refrigerant in the water-refrigerant heat exchanger (15);
the indoor unit (20) includes the indoor air heat exchanger (21), and a second refrigerant pipe unit (22A, 22B) connecting the indoor air heat exchanger (21) to the fifth three-way valve (16E) and the third bypass pipe (17C); and
the hot water supply unit (3) includes a second water circulation pipe unit (31A, 31B) connected to the first water circulation pipe unit (19A, 19B), and a storage tank (32) connected to the second water circulation pipe unit (31A, 31 B).

8. The heat pump type hot water supply air conditioner according to claim 7, further comprising a control device (4) to control ON/OFF states of the first to fifth three-way valves (16A-E).

9. The heat pump type hot water supply air conditioner according to claim 8, wherein, when the control device (4) switches off the first to third three-way valves (16A-C) and switches on the fourth and fifth three-way valves (16D-E), an indoor air cooling operation or an indoor air heating operation is performed.

10. The heat pump type hot water supply air conditioner according to claim 8, wherein, when the control device (4) switches off the first to fifth three-way valves (16A-E), a hot water supply operation or a cold water supply operation is performed.

11. The heat pump type hot water supply air conditioner according to claim 8, wherein, when the control device (4) switches on the first, third, and fifth three-way valves (16A, 16C, 16E) and switches off the second and fourth three-way valves (16B, 16D), an indoor air cooling and hot water supply combined operation is performed.

12. The heat pump type hot water supply air conditioner according to claim 8, wherein, when the control device (4) switches on the first, second, and fifth three-way valves (16A, 16B, 16E) and switches off the third and fourth three-way valves (16C, 16D), an indoor air cooling and hot water supply combined operation is performed.

13. An outdoor unit (10) of a heat pump type hot water supply air conditioner comprising:
a refrigerating cycle apparatus (2) according to claim 1; and
a water circulation pipe unit (19A, 19B) exchanging heat with a refrigerant in the water-refrigerant heat exchanger (15).

14. The outdoor unit according to claim 13, further comprising a sub refrigerant pipe (18) connected to the fifth three-way valve (16E) and exposed to the outside,
wherein the third bypass pipe (17C) is provided above the sub refrigerant pipe (18) and exposed to the outside.

15. The outdoor unit according to claim 14, wherein the water circulation pipe unit (19A, 19B) includes a first water circulation pipe (19A) and a second water circulation pipe (19B) provided below the third bypass pipe (17C) and the sub refrigerant pipe (18), arranged in the vertical direction so as to pass through the water-refrigerant heat exchanger (15), and exposed to the outside.

## Patentansprüche

1. Kühlkreisvorrichtung (2), umfassend:
eine erste Kühlmittelrohreinheit (11), mit der aufeinander folgend ein Kompressor (12), ein erstes Dreiwegeventil (16A), ein zweites Dreiwegeventil (16B), ein Außenluftwärmetauscher (13), ein drittes Dreiwegeventil (16C), ein elektronisches Expansionsventil (14), ein viertes Dreiwegeventil (16D), ein Wasser-Kühlmittel-Wärmetauscher (15), ein fünftes Dreiwegeventil (16E) und ein Innenluftwärmetauscher (21) verbunden sind;
ein erstes Überleitrohr (17A), das das erste Dreiwegeventil (16A) mit der ersten Kühlmittelrohreinheit (11) zwischen dem Wasser-Kühlmittel-Wärmetauscher (15) und dem fünften Dreiwegeventil (16E) verbindet;
ein zweites Überleitrohr (17B), das das zweite Dreiwegeventil (16B) und das dritte Dreiwegeventil (16C) verbindet;
ein drittes Überleitrohr (17C), das das vierte Dreiwegeventil (16B) und den Innenluftwärmetauscher (21) verbindet; und
ein viertes Überleitrohr (17B), das das zweite Überleitrohr (17B) und das dritte Überleitrohr (17C) verbindet.

2. Kühlkreisvorrichtung nach Anspruch 1, wobei das Kühlmittel die erste Kühlmittelrohreinheit (11) durchfließt und keines der ersten bis vierten Überleitrohre (17A-D) durchfließt, wenn das erste bis dritte Dreiwegeventil (16A-E) abgeschaltet ist.

3. Kühlkreisvorrichtung nach Anspruch 1, wobei das Kühlmittel die erste Kühlmittelrohreinheit (11) und das erste bis vierte Überleitrohr (17A-D) durchfließt, wenn das erste, dritte und fünfte Dreiwegeventil (16A, 16C, 16E) angeschaltet und das zweite und vierte Dreiwegeventil (16B, 16D) abgeschaltet sind.

4. Kühlkreisvorrichtung nach Anspruch 1, wobei das Kühlmittel durch das dritte Überleitrohr (17C) in den Innenluftwärmetauscher (21) fließt, wenn das erste, zweite und dritte Dreiwegeventil (16A, 16B, 16C) abgeschaltet und das vierte und fünfte Dreiwegeventil (16D, 16E) angeschaltet sind.

5. Kühlkreisvorrichtung nach Anspruch 1, wobei das Kühlmittel durch das erste Überleitrohr (17A) in den Wasser-Kühlmittel-Wärmetauscher (15) fließt, wenn das erste, dritte und fünfte Dreiwegeventil (16A, 16C, 16E) angeschaltet und das zweite und vierte Dreiwegeventil (16B, 16D) abgeschaltet sind, und dann aufeinanderfolgend durch das vierte Dreiwegeventil (16D), das elektronische Expansionsventil (14), das dritte Dreiwegeventil (16C), das zweite Überleitrohr (17B), das vierte Überleitrohr (17D) und das dritte Überleitrohr (17C) in den Innenluftwärmetauscher (21) fließt.

6. Kühlkreisvorrichtung nach Anspruch 1, wobei das Kühlmittel durch das erste Überleitrohr (17A) in den Wasser-Kühlmittel-Wärmetauscher (15) fließt, wenn das erste, zweite und fünfte Dreiwegeventil (16A, 16B, 16E) angeschaltet und das dritte und vierte Dreiwegeventil (16C, 16B) abgeschaltet sind, und dann aufeinanderfolgend durch das vierte Dreiwegeventil (16D), das elektronische Expansionsventil (14), das dritte Dreiwegeventil (16C), den Außenluftwärmetauscher (13), das zweite Dreiwegeventil (16B), das zweite Überleitrohr (17B), das vierte Überleitrohr (17D) und das dritte Überleitrohr (16C) fließt.

7. Wärmepumpenähnliche Warmwasserversorgungs-Klimaanlage (1), umfassend eine Außeneinheit (10), eine Inneneinheit (20) und eine Warmwasserversorgungseinheit (3), wobei:
die Außeneinheit (10) eine Kühlkreisvorrichtung (2) nach Anspruch 1 umfasst; und
eine erste Wasserumwälzrohreinheit (19A, 19B) Wärme mit einem Kühlmittel in dem Wasser-Kühlmittel-Wärmetauscher (15) austauscht;
die Inneneinheit (20) den Innenluftwärmetauscher (21) umfasst, und eine zweite Kühlmittelrohreinheit (22A, 22B) den Innenluftwärmetauscher (21) mit dem fünften Dreiwegeventil (16E) und dem dritten Überleitrohr (17C) verbindet; und
die Warmwasserversorgungseinheit (3) eine zweite Wasserumwälzrohreinheit (31A, 31 B), die mit der ersten Wasserumwälzrohreinheit (19A, 19B) verbunden ist, und einen Speicherbehälter (32), der mit der zweiten Wasserumwälzrohreinheit (31A, 31 B) verbunden ist, umfasst.

8. Wärmepumpenähnliche Warmwasserversorgungs-Klimaanlage nach Anspruch 7, des Weiteren umfassend eine Steuereinrichtung (4), um Ein-/Aus-Zustände des ersten bis fünften Dreiwegeventils (16A-E) zu steuern.

9. Wärmepumpenähnliche Warmwasserversorgungs-Klimaanlage nach Anspruch 8, wobei Innenluftkühlbetrieb oder Innenluftheizbetrieb durchgeführt wird, wenn die Steuereinrichtung (4) das erste bis dritte Dreiwegeventil (16A-C) abschaltet und das vierte und fünfte Dreiwegeventil (16D-E) anschaltet.

10. Wärmepumpenähnliche Warmwasserversorgungs-Klimaanlage nach Anspruch 8, wobei Warmwasserversorgungsbetrieb oder Kaltwasserversorgungsbetrieb durchgeführt wird, wenn die Steuereinrichtung (4) das erste bis fünfte Dreiwegeventil (16A-E) abschaltet.

11. Wärmepumpenähnliche Warmwasserversorgungs-Klimaanlage nach Anspruch 8, wobei Innenluftkühlung und Warmwasserversorgung kombinierender Betrieb durchgeführt wird, wenn die Steuereinrichtung (4) das erste, dritte und fünfte Dreiwegeventil (16A, 16C, 16E) anschaltet und das zweite und vierte Dreiwegeventil (16B, 16D) abschaltet.

12. Wärmepumpenähnliche Warmwasserversorgungs-Klimaanlage nach Anspruch 8, wobei Innenluftkühlung und Warmwasserversorgung kombinierender Betrieb durchgeführt wird, wenn die Steuereinrichtung (4) das erste, zweite und fünfte Dreiwegeventil (16A, 16B, 16E) anschaltet und das dritte und vierte Dreiwegeventil (16C, 1 DB) abschaltet.

13. Außeneinheit (10) einer wärmepumpenähnlichen Warmwasserversorgungs-Klimaanlage, umfassend:
eine Kühlkreisvorrichtung (2) nach Anspruch 1; und
eine Wasserumwälzrohreinheit (19A, 19B), die Wärme mit einem Kühlmittel in dem Wasser-Kühlmittel-Wärmetauscher (15) austauscht.

14. Außeneinheit nach Anspruch 13, des Weiteren umfassend ein Kühlmittel-Zwischenrohr (18), das mit dem fünften Dreiwegeventil (16E) verbunden und nach außen freigelegt ist,
wobei das dritte Überleitrohr (17C) oberhalb des Kühlmittel-Zwischenrohrs (18) vorgesehen und nach außen freigelegt ist.

15. Außeneinheit nach Anspruch 14, wobei die Wasserumwälzrohreinheit (19A, 19B) ein erstes Wasserumwälzrohr (19A) und ein zweites Wasserumwälzrohr (19B) umfasst, die unter dem dritten Überleitrohr (17C) und dem Kühlmittel-Zwischenrohr (18) vorgesehen und in der vertikalen Richtung angeordnet sind, so dass sie durch den Wasser-Kühlmittel-Wärmetauscher (15) hindurchführen und nach außen freigelegt sind.

## Revendications

1. Appareil à cycle de réfrigération (2) comprenant :
une première unité de tuyau de réfrigérant (11), à laquelle sont séquentiellement connectés un compresseur (12), une première vanne trois voies (16A), une deuxième vanne trois voies (16B), un échangeur de chaleur d'air extérieur (13), une troisième vanne trois voies (16C), une soupape d'expansion électronique (14), une quatrième vanne trois voies (16D), un échangeur de chaleur eau-réfrigérant (15), une cinquième vanne trois voies (16E), et un échangeur de chaleur d'air intérieur (21) ;
un premier tuyau de dérivation (17A) qui connecte la première vanne trois voies (16A) à la première unité de tuyau de réfrigérant (11) entre l'échangeur de chaleur eau-réfrigérant (15) et la cinquième vanne trois voies (16E) ;
un deuxième tuyau de dérivation (17B) qui connecte la deuxième vanne trois voies (16B) et la troisième vanne trois voies (16C) ;
un troisième tuyau de dérivation (17C) qui connecte la quatrième vanne trois voies (16D) et l'échangeur de chaleur d'air intérieur (21) ; et
un quatrième tuyau de dérivation (17D) qui connecte le deuxième tuyau de dérivation (17B) et le troisième tuyau de dérivation (17C).

2. Appareil à cycle de réfrigération selon la revendication 1, dans lequel, quand les première à cinquième vannes trois voies (16A-E) sont fermées, le réfrigérant traverse la première unité de tuyau de réfrigérant (11) et ne traverse aucun autre tuyau parmi les premier à quatrième tuyaux de dérivation (17A-D).

3. Appareil à cycle de réfrigération selon la revendication 1, dans lequel, quand les première, troisième et cinquième vannes trois voies (16A, 16C, 16E) sont ouvertes et les deuxième et quatrième vannes trois voies (16B, 16D) sont fermées, le réfrigérant traverse la première unité de tuyau de réfrigérant (11) et les premier à quatrième tuyaux de dérivation (17A-D).

4. Appareil à cycle de réfrigération selon la revendication 1, dans lequel, quand les première, deuxième et troisième vannes trois voies (16A, 16B, 16C) sont fermées et les quatrième et cinquième vannes trois voies (16D, 16E) sont ouvertes, le réfrigérant s'écoule vers l'échangeur de chaleur d'air intérieur (21) à travers le troisième tuyau de dérivation (17C).

5. Appareil à cycle de réfrigération selon la revendication 1, dans lequel, quand les première, troisième et cinquième vannes trois voies (16A, 16C, 16E) sont ouvertes et les deuxième et quatrième vannes trois voies (16B, 16D) sont fermées, le réfrigérant s'écoule vers l'échangeur de chaleur eau-réfrigérant (15) à travers le premier tuyau de dérivation (17A), et s'écoule ensuite vers l'échangeur de, chaleur d'air intérieur (21) séquentiellement à travers la quatrième vanne trois voies (16D), la soupape d'expansion électronique (14), la troisième vanne trois voies (16C), le deuxième tuyau de dérivation (17B), le quatrième tuyau de dérivation (17D) et le troisième tuyau de dérivation (17C).

6. Appareil à cycle de réfrigération selon la revendication 1, dans lequel, quand les première, deuxième et cinquième vannes trois voies (16A, 16B, 16E) sont ouvertes et les troisième et quatrième vannes trois voies (16C, 16D) sont fermées, le réfrigérant s'écoule vers l'échangeur de chaleur eau-réfrigérant (15) à travers le premier tuyau de dérivation (17A), et s'écoule ensuite vers l'échangeur de chaleur d'air intérieur (21) séquentiellement à travers la quatrième vanne trois voies (16D), la soupape d'expansion électronique (14), la troisième vanne trois voies (16C), l'échangeur de chaleur d'air extérieur (13), la deuxième vanne trois voies (16B), le deuxième tuyau de dérivation (17B), le quatrième tuyau de dérivation (17D) et le troisième tuyau de dérivation (17C).

7. Climatiseur avec alimentation d'eau chaude de type pompe à chaleur (1) comprenant une unité extérieure (10), une unité intérieure (20), et une unité d'alimentation d'eau chaude (3), dans lequel :
l'unité extérieure (10) comprend un appareil à cycle de réfrigération (2) selon la revendication 1 ; et
une première unité de tuyau de circulation d'eau (19A, 19B) qui échange de la chaleur avec un réfrigérant dans l'échangeur de chaleur eau-réfrigérant (15) ;
l'unité intérieure (20) comprend l'échangeur de chaleur d'air intérieur (21) et une deuxième unité de tuyau de réfrigérant (22A, 22B) qui connecte l'échangeur de chaleur d'air intérieur (21) à la cinquième vanne trois voies (16E) et au troisième tuyau de dérivation (17C) ; et
l'unité d'alimentation d'eau chaude (3) comprend une deuxième unité de tuyau de circulation d'eau (31A, 31B) connectée à la première unité de tuyau de circulation d'eau (19A, 19B) et un réservoir de stockage (32) connecté à la deuxième unité de tuyau de circulation d'eau (31 A, 31B).

8. Climatiseur avec alimentation d'eau chaude de type pompe à chaleur selon la revendication 7, comprenant en outre un dispositif de contrôle (4) pour commander des états ouvert/fermé, soit ON/OFF, des première à cinquième vannes trois voies (16A-E).

9. Climatiseur avec alimentation d'eau chaude de type pompe à chaleur selon la revendication 8, dans lequel, quand le dispositif de contrôle (4) ferme les première à troisième vannes trois voies (16A-C) et ouvre les quatrième et cinquième vannes trois voies (16D-E), une opération de refroidissement de l'air intérieur ou un opération de chauffage de l'air intérieur est mise en oeuvre.

10. Climatiseur avec alimentation d'eau chaude de type pompe à chaleur selon la revendication 8, dans lequel, quand le dispositif de contrôle (4) ferme les première à cinquième vannes trois voies (16A-E), une opération d'alimentation d'eau chaude ou une opération d'alimentation d'eau froide est mise en oeuvre.

11. Climatiseur avec alimentation d'eau chaude de type pompe à chaleur selon la revendication 8, dans lequel, quand le dispositif de contrôle (4) ouvre les première, troisième et cinquième vannes trois voies (16A, 16C, 16E) et ferme les deuxième et quatrième vannes trois voies (16B, 16D), une opération combinée de refroidissement de l'air intérieur et d'alimentation d'eau chaude est mise en oeuvre.

12. Climatiseur avec alimentation d'eau chaude de type pompe à chaleur selon la revendication 8, dans lequel, quand le dispositif de contrôle (4) ouvre les première, deuxième et cinquième vannes trois voies (16A, 16B, 16E) et ferme les troisième et quatrième vannes trois voies (16C, 16D), une opération combinée de refroidissement de l'air intérieur et d'alimentation d'eau chaude est mise en oeuvre.

13. Unité extérieure (10) d'un climatiseur avec alimentation d'eau chaude de type pompe à chaleur, comprenant :
un appareil à cycle de réfrigération (2) selon la revendication 1 ; et
une unité de tuyau de circulation d'eau (19A, 19B) qui échange de la chaleur avec un réfrigérant dans l'échangeur de chaleur eau-réfrigérant (15).

14. Unité extérieure selon la revendication 13, comprenant en outre un tuyau de sous-réfrigérant (18) connecté à la cinquième vanne trois voies (16E) et exposé à l'extérieur,
dans laquelle le troisième tuyau de dérivation (17C) est pourvu au-dessus du tuyau de sous-réfrigérant (18) et exposé à l'extérieur.

15. Unité extérieure selon la revendication 14, dans laquelle l'unité de tuyau de circulation d'eau (19A, 19B) comprend un premier tuyau de circulation d'eau (19A) et un deuxième tuyau de circulation d'eau (19B) pourvus sous le troisième tuyau de dérivation (17C) et le tuyau de sous-réfrigérant (18), agencés en direction verticale de manière à traverser l'échangeur de chaleur eau-réfrigérant (15), et exposés à l'extérieur.
